# DEMANDE DE BREVET EUROPEEN

(11) **EP 1 987 984 A1**
(43) Date de publication de la demande: **05.11.2008**
(21) Numéro de dépôt: 08155357.0
(22) Date de dépôt: 29.04.2008
(51) Int. Cl.: B60Q 1/00

(54) **Dispositif pour le remplacement d'une source lumineuse de module optique de véhicule automobile.**

(30) Priorité: 04.05.2007 FR 0703266
(71) Demandeur: VALEO VISION, 93012 Bobigny (FR)
(72) Inventeur: Arlon, Philippe, 77330 Ozoir la Ferriere (FR)

(57) **Abrégé**

La présente invention a pour objet un dispositif (210 ;300) pour le remplacement d'une lampe (214) d'une source lumineuse (211) d'un système d'éclairage (212) et/ou de signalisation de véhicule automobile, comportant:
- un élément réflecteur (213);
- ladite source lumineuse, avec un support de lampe (215), solidaire de la lampe à remplacer, ledit support de lampe assurant le maintien, dans une configuration de fonctionnement, de la lampe au sein du réflecteur ;
- une glace (210) pour laisser passer des rayons lumineux (219), produits par la source lumineuse, sous la forme d'un faisceau lumineux (221) selon un axe optique (222);
- un boîtier (217) assurant le maintien de la glace et de l'élément réflecteur ;
le support de lampe étant disposé en vis-à-vis d'une ouverture (225) ménagée dans le boîtier du dispositif, et étant accessible depuis l'extérieur du véhicule automobile.

## Description

La présente invention a pour objet un dispositif pour le remplacement d'une source lumineuse de module optique de véhicule automobile. L'invention a essentiellement pour but de proposer une solution pour faciliter une opération de changement d'une source lumineuse, notamment une lampe présente dans un dispositif d'éclairage ou de signalisation.

Le domaine de l'invention est, d'une façon générale, celui des projecteurs de véhicule automobile. Dans ce domaine, on connaît différents types de dispositifs, destinés à l'éclairage de la route ou à la signalisation, parmi lesquels on trouve essentiellement:
- des feux de position, d'intensité et de portée faible;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur; ce sont des faisceaux sans coupure
- des feux antibrouillard ;
- des feux de croisement, ou codes, d'intensité importante et de portée sur la route avoisinant 70 mètres;
- des projecteurs perfectionnés, dits bifonctions, qui cumulent les fonctions de feux de croisement et de feu de route en incorporant un cache amovible;
- des dispositifs de signalisation, par exemple de type clignotants...

Il existe deux familles principales de modules optiques, qui correspondent à deux agencements distincts desdits modules optiques, et qui sont susceptibles d'intervenir dans le dispositif selon l'invention. On comprend par module optique un système optique comprenant au moins une source lumineuse, par exemple une lampe halogène ou une lampe xénon, disposée dans un réflecteur, et qui est de préférence autonome, c'est-à-dire qui est apte à être allumé ou éteint séparément des autres modules optiques du dispositif d'éclairage dans lequel il est installé.

Les deux familles principales de modules optiques sont les suivantes:
La première famille est celle des modules optiques dits elliptiques. Dans ce type de projecteurs, une tache de concentration lumineuse est
engendrée par une source lumineuse disposée dans un miroir, ou réflecteur. Typiquement, la source lumineuse est disposée au premier foyer d'un miroir en forme d'ellipsoïde, ladite tache se formant au second foyer du miroir. La tache de concentration lumineuse est ensuite projetée sur la route par une lentille convergente, par exemple une lentille de type plan-convexe.

La seconde famille est celle des modules optiques dits paraboliques. Dans ce type de modules optiques, un faisceau lumineux est engendré par une source lumineuse de petite dimension disposée dans un réflecteur, ou miroir. La projection sur la route des rayons lumineux réfléchis par un réflecteur approprié permet d'obtenir directement un faisceau lumineux obéissant aux différentes contraintes imposées par les normes. Cette famille de modules optiques inclut les projecteurs dits à surface libre, ou surface complexe, qui permettent d'obtenir directement un faisceau lumineux présentant une ligne de coupure désirée.

Comme détaillé ultérieurement, la source lumineuse à remplacer dans le dispositif selon l'invention peut appartenir indifféremment à la première famille ou à la deuxième famille de module optique.

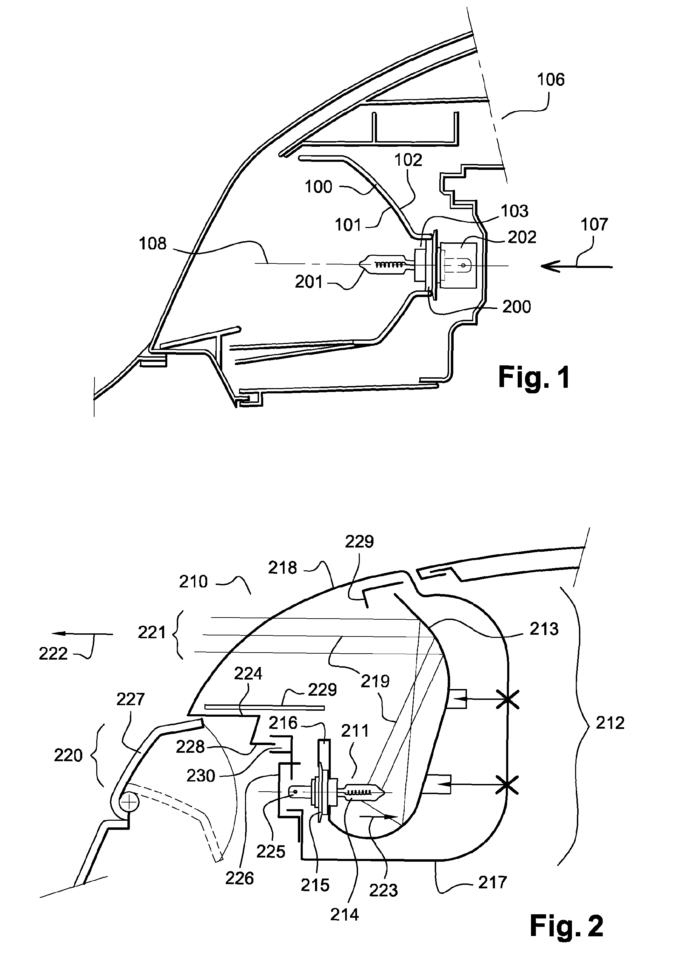

Dans les dispositifs de l'état de la technique, la source lumineuse est mise en place au sein du réflecteur en étant introduite par l'arrière de celui-ci. Un exemple de réalisation d'un dispositif d'éclairage 106 de l'état de la technique, illustrant une telle mise en place, est donné à la figure 1.

Sur cette figure, on a représenté en coupe, de façon schématique, un réflecteur 100 sur lequel on vient fixer une source lumineuse 200. La source lumineuse 200 comporte essentiellement une lampe 201 fixée sur un support 202. Le réflecteur 100 est constitué d'une face externe 101 et d'une face interne 102. La face interne 102 est également appelée surface optique du réflecteur : c'est elle qui est chargée de réfléchir les rayons lumineux émis par la source lumineuse 200 quand cette dernière est fixée sur le réflecteur 100 et que la lampe 201 rayonne.

Le réflecteur 100 comporte une ouverture circulaire 103 ménagée approximativement à son sommet.

L'opération de fixation simplifiée de la source lumineuse 200 sur le réflecteur 100 peut se décomposer par exemple en deux mouvements distincts : un premier mouvement, dit d'introduction, consiste en une translation selon une direction et un sens 107, correspondant à l'axe de montage 108 de la source lumineuse 200, vers le réflecteur 100 de telle sorte que la lampe 201 soit introduite dans l'ouverture circulaire 103 du réflecteur 200 en amenant en contact une surface d'appui sur la face externe 102 du réflecteur et une surface d'appui du support 202 de la lampe 201. La lampe 201 est ainsi amenée en regard d'une glace 110, au travers de laquelle les rayons lumineux issus de la source lumineuse 200 seront émis soit directement, soit après réflexion sur le réflecteur 100. On parle d'introduction par l'arrière du réflecteur, la lampe étant amenée en position dans le réflecteur 100 par l'ouverture 103 du réflecteur 100. Un avantage d'une telle introduction par l'arrière est que la lampe 201 ne risque pas de rentrer en contact avec la surface réfléchissante 102 du réflecteur 100, et ainsi ne risque pas d'endommager ladite surface 102.

D'une manière générale, la direction d'introduction 107 correspond à l'axe de montage de la lampe. On définit l'axe de montage comme le sens selon lequel s'effectue une opération de montage de la lampe considérée. Un axe de montage présente une orientation de montage, correspondant au sens du mouvement suivi sur l'axe de montage lorsque la lampe est retirée du réflecteur. L'orientation de démontage présente un sens opposé au sens de l'opération de montage.

Une fois le mouvement d'introduction achevé, on peut alors procéder au deuxième mouvement, qui consiste à réaliser le verrouillage de la source lumineuse 200 sur le réflecteur 100. L'étape de verrouillage consiste en un mouvement de rotation de la source lumineuse 200, par rapport au réflecteur 100. Dans d'autres exemples de réalisation de l'état de la technique, un unique mouvement, par exemple de translation, est suffisant pour venir placer la lampe au sein du réflecteur.

Si les structures des supports et des réflecteurs varient d'un dispositif projecteur à un autre, on a choisi, dans tous les modules optiques de l'état de la technique, notamment pour protéger la surface réfléchissante du réflecteur considéré, de positionner les sources lumineuses au sein des réflecteurs en les introduisant par l'arrière du réflecteur, comme dans l'exemple qui vient d'être décrit. L'opération de retrait, ou de démontage, des sources lumineuses s'effectue donc également par l'arrière du réflecteur, à l'arrière du projecteur.

Un problème se pose donc pour le remplacement des sources lumineuses des modules optiques de l'état de la technique : en effet, comme expliqué, celles-ci doivent nécessairement être retirées par l'arrière du module optique, en étant retiré par le fond des réflecteurs dans lesquels elles sont disposées. Or l'arrière du module optique n'est pas directement accessible depuis l'extérieur du véhicule sur lequel il est installé, car dans les réalisations de l'état de la technique, il est situé à l'opposé de la glace du projecteur considéré, dans la zone du module optique la plus éloignée de la partie visible depuis l'extérieur du véhicule.

En conséquence, l'opération de remplacement des lampes est particulièrement fastidieuse, et rarement accessible pour la plupart des utilisateurs de véhicule automobile. En effet, les solutions existantes sont essentiellement de deux types : soit il faut totalement déposer le dispositif projecteur dont on veut changer la lampe, pour pouvoir y accéder par l'arrière; soit il faut le déplacer, par exemple au moyen de rails spécifiques, pour pouvoir disposer d'un espace suffisant pour glisser la main et accéder, de façon peu confortable, à la lampe à remplacer.

Par ailleurs, il faut noter qu'il est impossible, pour des raisons réglementaires mais également pour des raisons matérielles - la glace étant collée sur le boîtier du dispositif projecteur considéré - de retirer ladite glace pour pouvoir accéder plus simplement à la lampe à remplacer. Quand bien même la glace pourrait être retirée, le fait que la lampe doit être retirée avec son support par l'arrière du réflecteur rendrait toujours l'opération de remplacement de la lampe compliquée.

L'objet de l'invention propose une solution aux problèmes qui viennent d'être exposés. Dans l'invention, on propose un dispositif permettant de remplacer une lampe de module optique de manière simple, sans avoir à déplacer - et a fortiori sans avoir à déposer - le module optique considéré. A cet effet, dans l'invention, on propose notamment de modifier l'agencement de différents éléments au sein d'un module optique, notamment en rendant directement accessible, depuis l'extérieur du véhicule, la source lumineuse comportant la lampe à remplacer ; avantageusement, la source lumineuse est alors orientée dans un sens globalement opposé à celui de l'axe optique du module optique considéré. Un premier sens et un deuxième sens, par exemple de propagation de signaux lumineux, sont dits globalement opposés si, en considérant des vecteurs qui les représentent, le produit scalaire de ces vecteurs est négatif.

Le support de la source lumineuse, maintenant la lampe à remplacer, est alors le premier élément de la source lumineuse qui peut être accessible depuis l'extérieur du véhicule. Aussi, dans l'invention, on prévoit de réaliser un accès au support de la source lumineuse, directement depuis l'extérieur du véhicule; la source lumineuse comportant la lampe à remplacer peut ainsi directement être retirée du module optique auquel elle appartient, sans avoir à bouger l'ensemble du module optique. Avantageusement, le réflecteur du module optique présente une structure adaptée pour réfléchir les rayons lumineux issus de la source lumineuse et les transmettre, au travers de la glace associée au module optique, selon leur direction d'éclairage requise.

L'invention concerne donc essentiellement un dispositif pour le remplacement d'une lampe d'une source lumineuse d'un système d'éclairage et/ou de signalisation de véhicule automobile, comportant notamment :
- un élément réflecteur ;
- ladite source lumineuse, avec un support de lampe, solidaire de la lampe à remplacer, ledit support de lampe assurant le maintien, dans une configuration de fonctionnement, de la lampe au sein du réflecteur ;
- une glace pour laisser passer des rayons lumineux, produits par la source lumineuse, sous la forme d'un faisceau lumineux selon un axe optique;
- un boîtier assurant le maintien de la glace et de l'élément réflecteur;
   tel que le support de lampe est disposé en vis-à-vis d'une ouverture ménagée dans le boîtier du dispositif, et est accessible depuis l'extérieur du véhicule automobile (En considérant le système d'éclairage et/ou de signalisation en position de montage dans le véhicule).

De préférence, l'axe de montage de la lampe se trouve au dessous (ou au dessus) de l'axe optique du faisceau lumineux émis par le dispositif à travers sa glace. (Toujours en considérant le dispositif dans sa position de montage dans le véhicule).

Outre les caractéristiques principales qui viennent d'être mentionnées dans le paragraphe précédent, le dispositif selon l'invention peut présenter une ou plusieurs caractéristiques supplémentaires parmi les suivantes :
- la lampe présente un axe de montage orienté selon un sens globalement opposé à celui de l'axe optique du faisceau (On comprend par « globalement » opposé, le fait que les axes soient parallèles entre eux, ou obliques l'un par rapport à l'autre, faisant entre eux un angle de préférence obtus, notamment compris entre 90 et 180°, comme exemplifié plus loin).
- l'ouverture dans le boîtier du dispositif, ménagée en vis-à-vis du support de lampe, est réalisée sous un plan définissant un bord (par exemple inférieur, supérieur, latéral) de la glace;
- l'ouverture dans le boîtier du dispositif, ménagée en vis-à-vis du support de lampe, est fermée par un capot amovible assurant l'étanchéité du boîtier ;
- l'ouverture dans le boîtier est accessible depuis l'extérieur du véhicule au niveau d'une pièce du véhicule située dans le prolongement (par exemple inférieur, supérieur, latéral) de la glace;
- l'ouverture dans le boîtier est accessible depuis l'extérieur du véhicule au niveau d'une trappe de visite;
- l'ouverture dans le boîtier est accessible depuis l'extérieur du véhicule au niveau d'une entrée d'air ;
- l'élément réflecteur présente une surface de réflexion apte à elle seule à modifier l'orientation des rayons lumineux produits par la source lumineuse pour qu'ils soient émis au travers de la glace;
- l'élément réflecteur coopère avec un élément optique complémentaire pour modifier l'orientation des rayons lumineux produits par la source lumineuse pour qu'ils soient émis au travers de la glace;
- l'élément optique complémentaire est un miroir, ou un barreau transparent;
- le système d'éclairage comporte une lentille (et /ou tout autre moyen optique du type élément dioptrique ou autre) ;
- l'axe de montage de la source lumineuse présente une inclinaison par rapport à un plan horizontal, l'angle d'inclinaison étant compris, en valeur absolue, entre 0 et 90 degrés, notamment entre 0 et 45 degrés;
- le système d'éclairage comporte au moins un élément de type masque, masquant la lampe et/ou une partie du pied de glace depuis l'extérieur du véhicule; (On comprend par « pied de glace » la zone périphérique de la glace de fermeture du dispositif qui est la zone de fixation de la glace au boîtier)
- le système d'éclairage réalise une fonction de type code, ou une fonction de type route, ou une fonction de type code et une fonction de type route;
- la lampe est du type halogène ou du type xénon, du type lampe à incandescence ou encore du type diode électroluminescente.

Les différentes caractéristiques supplémentaires du dispositif selon l'invention, dans la mesure où elles ne s'excluent pas mutuellement, sont combinées selon toutes les possibilités d'association pour aboutir à différents exemples de réalisation de l'invention.

La présente invention se rapporte également à un véhicule automobile équipé du dispositif selon l'invention, avec ses caractéristiques principales, et éventuellement une ou plusieurs caractéristiques supplémentaires qui viennent d'être mentionnées.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, déjà décrite, un exemple de réalisation de module optique de l'état de la technique, illustrant une introduction d'une source lumineuse par l'arrière du réflecteur;
- à la figure 2, un premier exemple de réalisation du dispositif selon l'invention.
- à la figure 3, un deuxième exemple de réalisation du dispositif selon l'invention;
- à la figure 4, un troisième exemple de réalisation du dispositif selon l'invention;
- à la figure 5, un exemple particulier de réflecteur susceptible d'être utilisé dans le dispositif selon l'invention;
- à la figure 6, l'exemple de réflecteur de la figure 4 disposé dans un dispositif selon l'invention.

Les différents éléments apparaissant sur plusieurs figures auront gardé, sauf précision contraire, la même référence. Les notions de direction et de position, de type "haut", "bas", "vertical"...sont mentionnées dans des conditions classiques de disposition du système optique d'éclairage et/ou de signalisation intervenant dans le dispositif selon l'invention, c'est-à-dire dans une position globalement horizontale, et un axe optique contenu dans un plan sensiblement horizontal.

La figure 2 montre un premier exemple 210 selon l'invention de dispositif de remplacement d'une source lumineuse 211, ou d'une lampe 214 de la source lumineuse. Le dispositif 210 comporte essentiellement un système d'éclairage 212, ici un dispositif projecteur de type code, et un accès 220 facilité à la source lumineuse 211 à remplacer.

Le système d'éclairage 212 comporte notamment la source lumineuse 211, qui est maintenue sur une partie particulière 216 d'un réflecteur 213, désignée comme partie support. La source lumineuse est elle-même constituée d'une lampe 214 maintenue dans un porte-lampe 215. L'ensemble réflecteur-source lumineuse est disposé dans un boîtier 217, fixé au véhicule et assurant notamment la fixation du réflecteur, qui est complété, sur sa partie avant, par une glace 218. La glace 218 est terminée, notamment au niveau d'un bord inférieur 224, globalement horizontal, par un pied de glace 228, qui vient s'insérer dans une gorge de collage 230 du boîtier 217.

La source lumineuse 211 émet une pluralité de rayons lumineux 219 qui contribuent à la réalisation d'un faisceau lumineux global 221 émis au travers de la glace 218 et présentant un axe optique 222, correspondant à une direction et un sens d'intensité maximale. Dans l'exemple représenté, l'élément réflecteur 213 présente une surface de réflexion apte à elle seule à modifier l'orientation des rayons lumineux produits par la source lumineuse pour qu'ils soient émis au travers de la glace.

La source lumineuse 211 est orientée selon un sens 223, correspondant à son sens de montage, globalement opposé au sens de l'axe optique. La source lumineuse présente ainsi un axe de montage, qui présente un angle avec l'axe optique 222 compris entre 90 degrés et 180. Dans l'exemple représenté, cet angle est voisin de 180 degrés. En d'autres termes, l'axe de montage présente, en considérant le sens 223 de montage, un angle d'inclinaison par rapport à l'horizontale compris, en valeur absolue, entre 0 et 90 degrés ;dans la majorité des exemples de réalisation, cet angle est plus précisément compris entre 0 et 45 degrés.

D'une manière générale dans la présente invention, par direction globalement opposée, on désigne le fait qu'une demi-droite qui prolongerait, dans le cas d'une lampe à incandescence, le filament dans la direction opposée à celle du support de la source lumineuse, ou, dans le cas d'une lampe à décharge, qui comprendrait l'axe joignant les deux électrodes et se prolongerait dans la direction opposée à celle du support de la source lumineuse, ou, dans le cas d'une LED, qui correspondrait à la direction moyenne d'émission de lumière de la LED, ne traverserait jamais un plan défini par la face d'entrée de la lentille de projection. Par exemple, dans le cas d'une LED lambertienne la direction moyenne d'émission de lumière de la LED est la demi perpendiculaire au plan du semi-conducteur et qui se prolonge dans la direction opposée à la surface éclairante du semi-conducteur.

Ainsi, vu de l'extérieur du véhicule automobile sur lequel est installé le dispositif 210, c'est le porte-lampe 215 qui constitue le premier élément accessible du système d'éclairage. Pour rendre la source lumineuse effectivement accessible, on prévoit, dans cet exemple de réalisation, de la placer en contrebas de la glace 218. Ainsi, la source lumineuse 211 est disposée sous un plan définissant le bord inférieur 224, globalement horizontal, de la glace 218. Par ailleurs, on prévoit de réaliser dans le boîtier 217 une ouverture 225 placée en vis-à-vis du support de lampe 214. L'ouverture 225 est fermée, pour des raisons d'étanchéité, par un capot 226, qui peut être vissé, clippé, ou maintenu par tout autre moyen sur l'ouverture 225.

Pour accéder à l'ouverture 225, on prévoit, dans cet exemple de réalisation, de ménager une trappe de visite, constituant l'accès 220 précédemment évoqué, en regard de l'ouverture 225, fermée par un capot 227. L'opération de remplacement de la source lumineuse est alors particulièrement aisée : il suffit pour l'intervenant de déplacer ou de retirer le capot amovible 227, de glisser sa main dans la trappe de visite 220, et de retirer le capot 226. Il accède alors directement à la source lumineuse 211, qu'il peut retirer, par le simple exercice d'une force de traction sur le support 214, et replacer aisément.

Dans d'autres exemples, la trappe de visite peut simplement correspondre à une entrée d'air présente sur la face du véhicule équipé du dispositif selon l'invention.

Dans certains exemples de réalisation, on prévoit la disposition, dans le système d'éclairage 212, de masques 229 destinés à cacher, pour des raisons esthétiques, la source lumineuse 211 depuis l'extérieur du véhicule, notamment au travers de la glace 218. Les masques servent parfois également à masquer le pied de lampe 228.

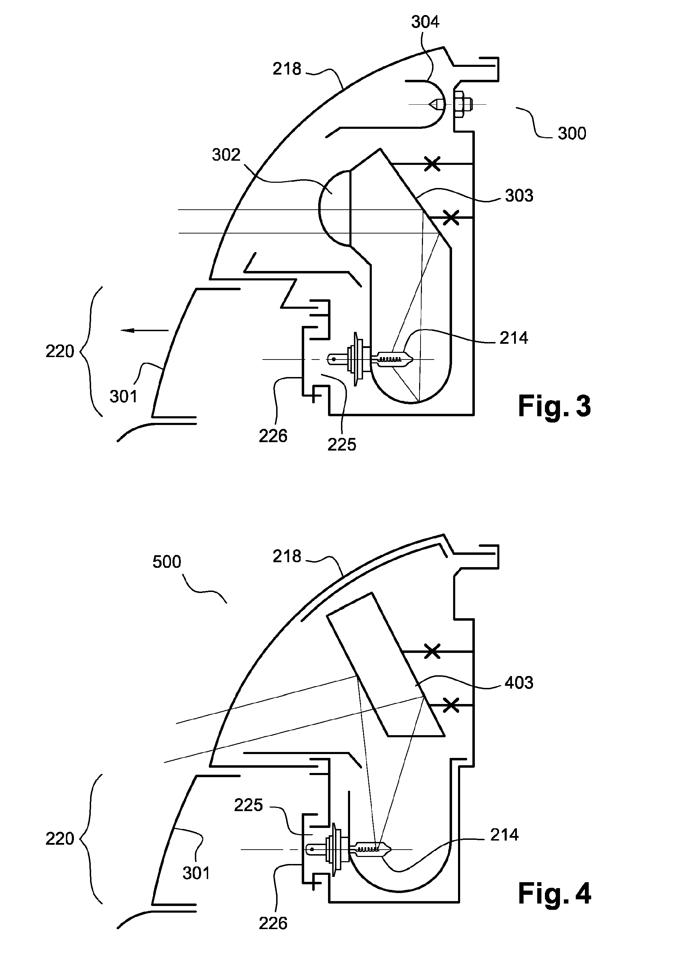

L'exemple de réalisation 300 montré à la figure 3 diffère de celui de la figure 2 essentiellement par le fait que le système optique intervenant est différent. A la figure 3, le système optique présent dans le dispositif selon l'invention est du type elliptique, avec la présence notamment d'une lentille 302, pour émettre le faisceau lumineux 221 au travers de la glace 218, et d'un élément optique de type plieuse 303, ou miroir, pour dévier au moins une partie des rayons lumineux vers la lentille 302. Par ailleurs, le dispositif 300 comporte un module complémentaire 304 de type clignotant. Cet exemple illustre le fait que le dispositif selon l'invention peut être réalisé pour des types de dispositifs projecteurs très variés.

Dans un autre exemple de réalisation 500 selon l'invention, représenté à la figure 4, la plieuse 303 est remplacée par un élément optique de type barreau transparent 403, remplissant une fonction similaire.

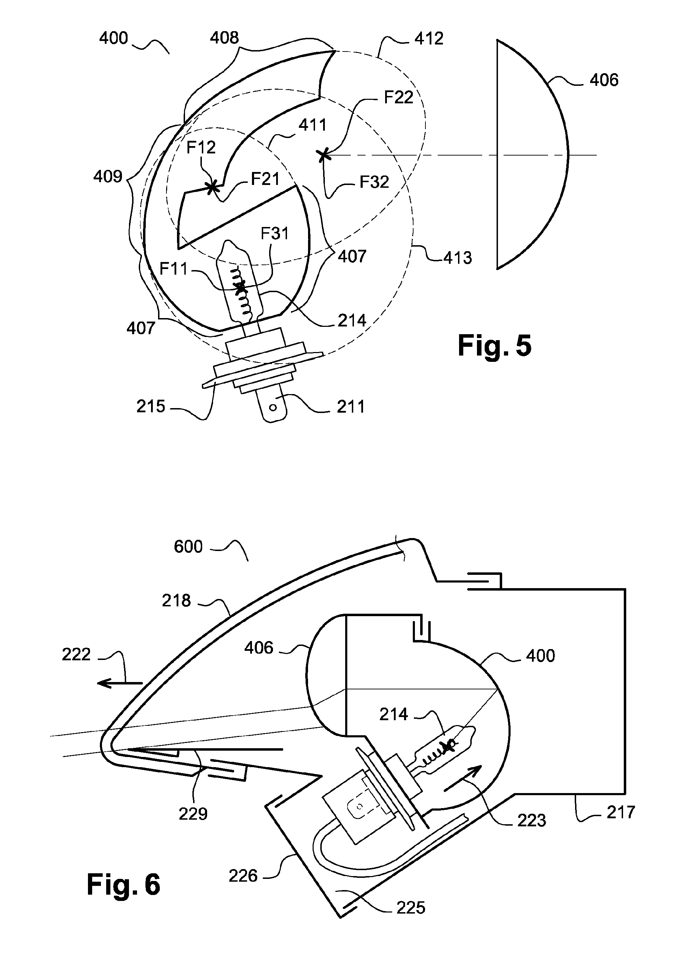

La figure 5 montre un exemple de réalisation, en vue de dessus, d'un réflecteur 400 susceptible d'être utilisé avec une lentille 406 dans un exemple de dispositif selon l'invention. L'exemple de la figure 4 montre une réalisation possible pour, en partant d'une source lumineuse non alignée avec l'axe optique du dispositif projecteur dans lequel elle est insérée, émettre un faisceau lumineux selon une direction globalement horizontale.

La surface réfléchissante du réflecteur, correspondant à sa face interne, va être définie notamment en référence à des surfaces définies à partir du terme ellipsoïde. D'une manière générale, une ellipsoïde, désignant ici une ellipsoïde de révolution, est un volume engendré par la révolution d'une ellipse autour de l'un des ses axes. Ainsi, toute section plane d'une ellipsoïde est une ellipse. Dans le présent document, on fait référence aux termes "formes d'ellipsoïdes" pour désigner une forme considérée dont la représentation mathématique générique connue la plus proche est l'ellipsoïde. De manière connue, une ellipsoïde présente trois ellipses principales, correspondant aux intersections des plans principaux de l'ellipsoïde avec l'ellipsoïde. On désigne par foyer principal d'une ellipsoïde chacun des foyers des ellipses principales de l'ellipsoïde. Deux ellipsoïdes distinctes présentant un foyer principal en commun sont dites conjuguées. L'expression "foyer principal de forme d'ellipsoïde" désigne un point situé dans le voisinage immédiat d'un foyer principal de l'ellipsoïde se rapprochant le plus de la forme d'ellipsoïde considérée.

Dans l'exemple représenté, le réflecteur 400 est constitué par la réunion de trois parties distinguables :
- une première partie 407 consiste en une portion d'une première forme d'ellipsoïde 411, désignée comme première portion, caractérisée par un premier foyer principal F11 et par un deuxième foyer principal F12; le filament de la lampe est approximativement centré sur le premier foyer;
- une deuxième partie 408 consiste en une portion d'une deuxième forme d'ellipsoïde 412, désignée comme deuxième portion, caractérisée par un premier foyer principal F21 et par un deuxième foyer principal F22; selon l'invention, la première forme d'ellipsoïde 411 et la deuxième forme d'ellipsoïde 412 sont conjuguées, c'est-à-dire que le premier foyer principal F21 de la deuxième forme d'ellipsoïde et le deuxième foyer principal F12 de la première forme d'ellipsoïde sont confondus ;
- une troisième partie 409 consiste en une portion d'une troisième forme d'ellipsoïde 413, désignée comme troisième portion, caractérisée par un premier foyer principal F31 et par un deuxième foyer principal F32; la troisième partie 409 assure la continuité, entre la première partie 407 et la deuxième partie 408 précédemment mentionnées, de la surface réfléchissante du réflecteur 400. Dans l'exemple représenté, la troisième forme d'ellipsoïde 413 est conjuguée avec la première forme d'ellipsoïde 411 et la deuxième forme d' ellipsoïde 412: d'une part le premier foyer F11 de la première forme d'ellipsoïde et le premier foyer principal F31 de la troisième forme d'ellipsoïde sont confondus; d'autre part, le deuxième foyer principal F22 de la deuxième forme d'ellipsoïde et le deuxième foyer principal F32 de la troisième forme d'ellipsoïde sont confondus.

La figure 6 montre un exemple de dispositif 600 selon l'invention dans lequel le réflecteur 400, associé à la lentille 406, est mis en place. La source lumineuse 211 est, comme on le voit également dans cet exemple, facilement accessible depuis l'extérieur du véhicule par un simple démontage du capot 226, l'inclinaison entre l'axe de montage de la source lumineuse et l'axe optique du dispositif projecteur étant dans cet exemple voisin de 45 degrés.

## Revendications

1. Dispositif (210 ;300) pour le remplacement d'une lampe (214) d'une source lumineuse (211) d'un système d'éclairage (212) et/ou de signalisation de véhicule automobile, comportant notamment :
- un élément réflecteur (213);
- ladite source lumineuse, avec un support de lampe (215), solidaire de la lampe à remplacer, ledit support de lampe assurant le maintien, dans une configuration de fonctionnement, de la lampe au sein du réflecteur ;
- une glace (210) pour laisser passer des rayons lumineux (219), produits par la source lumineuse, sous la forme d'un faisceau lumineux (221) selon un axe optique (222);
- un boîtier (217) assurant le maintien de la glace et de l'élément réflecteur ;
**caractérisé en ce que** le support de lampe est disposé en vis-à-vis d'une ouverture (225) ménagée dans le boîtier du dispositif, et est accessible depuis l'extérieur du véhicule automobile.

2. Dispositif selon la revendication précédente, **caractérisé en ce que** la lampe présente un axe de montage orienté selon un sens globalement opposé à celui de l'axe optique du faisceau.

3. Dispositif selon la revendication précédente, **caractérisé en ce que** l'axe de montage de la lampe se trouve au dessous ou au dessus de l'axe optique du faisceau lumineux émis par le dispositif à travers sa glace

4. Dispositif selon l'une au moins des revendications précédentes **caractérisé en ce que** l'ouverture dans le boîtier du dispositif, ménagée en vis-à-vis du support de lampe, est réalisée sous un plan définissant un bord (224) de la glace.

5. Dispositif selon l'une au moins des revendications précédentes **caractérisé en ce que** l'ouverture dans le boîtier du dispositif, ménagée en vis-à-vis du support de lampe, est fermée par un capot amovible (226) assurant l'étanchéité du boîtier.

6. Dispositif selon l'une au moins des revendications précédentes **caractérisé en ce que** l'ouverture dans le boîtier est accessible depuis l'extérieur du véhicule au niveau d'une pièce du véhicule située dans le prolongement de la glace.

7. Dispositif selon l'une au moins des revendications précédentes **caractérisé en ce que** l'ouverture dans le boîtier est accessible depuis l'extérieur du véhicule au niveau d'une trappe de visite (220).

8. Dispositif selon l'une au moins des revendications précédentes **caractérisé en ce que** l'ouverture dans le boîtier est accessible depuis l'extérieur du véhicule au niveau d'une entrée d'air.

9. Dispositif selon la revendication précédente **caractérisé en ce que** l'élément réflecteur présente une surface de réflexion apte à elle seule à modifier l'orientation des rayons lumineux produits par la source lumineuse pour qu'ils soient émis au travers de la glace.

10. Dispositif selon l'une au moins des revendications 1 à 8 **caractérisé en ce que** l'élément réflecteur coopère avec un élément optique complémentaire (303) pour modifier l'orientation des rayons lumineux produits par la source lumineuse pour qu'ils soient émis au travers de la glace.

11. Dispositif selon la revendication précédente **caractérisé en ce que** l'élément optique complémentaire est un miroir (303), ou un barreau transparent (403).

12. Dispositif selon l'une au moins des revendications précédentes **caractérisé en ce que** le système d'éclairage comporte une lentille (302).

13. Dispositif selon l'une au moins des revendications précédentes et selon la revendication 2 **caractérisé en ce que** l'axe de montage de la source lumineuse présente une inclinaison par rapport à un plan horizontal, l'angle d'inclinaison étant compris, en valeur absolue, entre 0 et 90 degrés, notamment entre 0 et 45 degrés.

14. Dispositif selon l'une au moins des revendications précédentes, **caractérisé en ce qu'**il comprend un accès au support de la source lumineuse, directement depuis l'extérieur du véhicule, la source lumineuse pouvant ainsi directement être retirée du module optique auquel elle appartient, sans avoir à bouger l'ensemble du module optique.

15. Dispositif selon l'une au moins des revendications précédentes, **caractérisé en ce que** la lampe est du type halogène ou du type xénon, du type lampe à incandescence ou encore du type diode électroluminescente.
